# EUROPEAN PATENT SPECIFICATION

(11) **EP 2 485 531 B1**
(45) Date of publication and mention of the grant of the patent: **17.05.2017**
(21) Application number: 10820715.0
(22) Date of filing: 01.10.2010
(51) Int. Cl.: H04W 36/04, H04W 48/10, H04W 36/00, H04W 8/18, H04W 84/04, H04W 12/08

(54) **HANDOVER TO A HOME NODE B IN HYBRID MODE**
HANDVOVER ZU EINEM HOME NODE B IM HYBRID MODUS
HANDOVER VERS UN HOME NODE B EN MODE HYBRIDE

(30) Priority: 01.10.2009 JP 2009229942
(43) Date of publication of application: 08.08.2012
(73) Proprietor: NTT DOCOMO, INC., Chiyoda-ku Tokyo 100-6150 (JP)
(72) Inventor: HAPSARI, Wuri Andarmawanti, Tokyo 100-6150 (JP); UMESH, Anil, Tokyo 100-6150 (JP); TAKAHASHI, Hideaki, Tokyo 100-6150 (JP); IWAMURA, Mikio, Tokyo 100-6150 (JP); ISHII, Minami, Tokyo 100-6150 (JP)
(74) Representative: Hoffmann Eitle
(86) International application number: PCT/JP2010/067264
(87) International publication number: WO 2011/040601

(56) References cited:
- JP-A- 2009 124 671
- QUALCOMM EUROPE: "Access control for in-bound handover to a CSG cell (UMTS)", 3GPP DRAFT; R3-091215, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. San Francisco, USA; 20090429, 29 April 2009 (2009-04-29), XP050341577, [retrieved on 2009-04-29]
- HUAWEI: "Access Control for inbound handover to HeNB subsystem", 3GPP DRAFT; S2-095142 ACCESS CONTROL FOR INBOUND HANDOVER TO HENB SUBSYSTEM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Kyoto; 20090904, 31 August 2009 (2009-08-31), XP050396659, [retrieved on 2009-08-25]
- NTT DOCOMO: 'Preliminary access check' 3GPP TSG-RAN WG2 #67 TDOC-R2-094944 24 August 2009, pages 1 - 2, XP050352877
- PANASONIC: 'Support for inbound CSG mobility' 3GPP TSG RAN WG2#65BIS R2-092388 23 March 2009, pages 1 - 3, XP050340112
- "3rd Generation Partnership Project; Technical Specification Group Services and System Aspects; Architecture aspects of Home NodeB and Home eNodeB (Release 9)", 3GPP STANDARD; 3GPP TR 23.830, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.6.0, 1 September 2009 (2009-09-01), pages 1-54, XP050363909,

## Description

### TECHNICAL FIELD

The present invention relates to a mobile communication method, a mobile station, and a radio base station.

### BACKGROUND ART

In a mobile communication system employing an LTE (Long Term Evolution) scheme defined in the 3GPP, it is possible to set a radio base station HeNB (Home eNB) capable of operating in any one of the states of "Open", "Closed", and "Hybrid".

The radio base station HeNB (or a cell, and the same applies below) operating in the "Open" is configured to provide a mobile communication service to both a registered mobile station and an unregistered mobile station in the radio base station HeNB.

Here, the registered mobile station in the radio base station HeNB is a mobile station UE belonging to CSG (Closed Subscriber Group) designated by CSG-ID of the radio base station HeNB, and the unregistered mobile station in the radio base station HeNB is a mobile station UE not belonging to the CSG designated by the CSG-ID of the radio base station HeNB.

Furthermore, the radio base station HeNB operating in the "Closed" is configured to provide the mobile communication service only to the registered mobile station in the radio base station HeNB.

Moreover, the radio base station HeNB (or a cell) operating in the "Hybrid" is configured to provide differentiated mobile communication services to a registered mobile station and an unregistered mobile station in the radio base station HeNB2, respectively.

For example, the radio base station HeNB operating in the "Hybrid" may also be configured to preferentially receive a communication start request from the registered mobile station and assign a resource for high speed communication, and to lower or reject the priority of a communication start request from the unregistered mobile station.

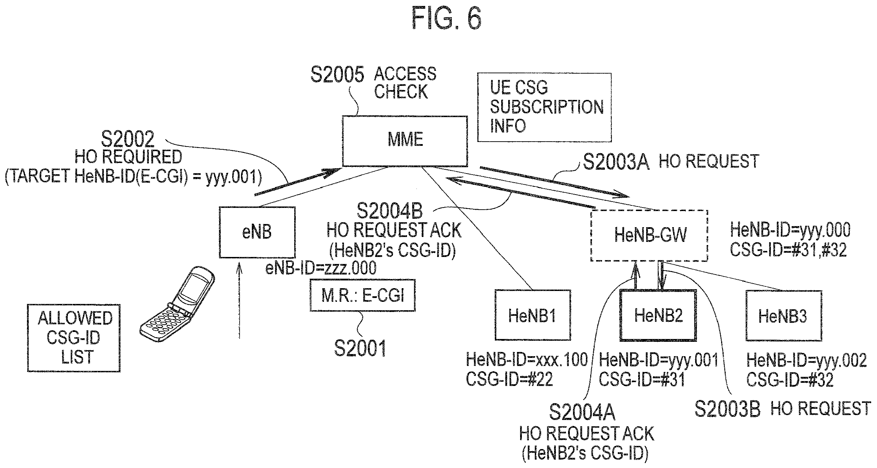

Hereinafter, with reference to Fig. 6, an operation of the mobile communication system when a mobile station UE is handed over to a cell subordinate to a radio base station HeNB2 operating in "Hybrid" will be described.

As illustrated in Fig. 6, in step S2001, the mobile station UE transmits, for example, a measurement report (Measurement Report) including E-CGI (EUTRAN Cell Global Identity) of the radio base station HeNB2 to a radio base station eNB.

In step S2002, the radio base station eNB transmits a handover request signal (HO REQUIRED) including identification information (HeNB-ID (E-CGI) = yyy.001) of the radio base station HeNB2 to a mobile switching center MME.

In step S2003A, the mobile switching center MME transmits a handover request signal (HO REQUEST) to a gateway device HeNB-GW, and in step S2003B, the gateway device HeNB-GW transmits the handover request signal (HO REQUEST) to the radio base station HeNB2.

In step S2004A, the radio base station HeNB2 transmits a handover request response signal (HO REQUEST ACK) including CSG-ID = #31 of the radio base station HeNB2 to the gateway device HeNB-GW, and in step S2004B, the gateway device HeNB-GW transmits the handover request response signal (HO REQUEST ACK) to the mobile switching center MME.

In step S2005, based on the CSG-ID = #31 of the radio base station HeNB2 included in the handover request response signal (HO REQUEST ACK) received from the gateway device HeNB-GW and CSG-ID of the mobile station UE managed by the mobile switching center MME, the mobile switching center MME determines whether the mobile station UE is a registered mobile station or an unregistered mobile station in the radio base station HeNB2.

Qualcomm Europe: "Access control for in-bound handover to a CSG cell (UMTS)", 3GPP DRAFT; R3-091215, 3^{RD} GENERATION PARTNERSHIP PROJECT (3GPP), relates to access control for in-bound handover to a CSG cell (UMTS). The contribution analyses the possible solutions to the case where the access control is performed by the network both for UEs that are capable of reading the cell ID and CSG ID of the target cell and for the UEs that are not capable of reading either.

HUAWEI: "Access Control for inbound handover to HeNB subsystem", 3GPP DRAFT; S2-095142 ACCESS CONTROL FOR INBOUND HANDOVER TO HENB SUBSYSTEM, 3RD GENERATION PARTNERSHIP PROJECT (3GPP), relates to access control for inbound handover to HeNB subsystem and discusses access control solutions for inbound handover to HeNB subsystem and gives an evaluation on these solutions. 3GPP TR 23.830 V0.6.0 (2009-09) discloses Architecture aspects of Home NodeB and Home eNodeB and states in particular that in case of resource allocation or UE context establishment, the HeNB shall be able to differentiate between registered and unregistered mobile stations. Therefore, the MME transmits an indication to the HeNB whether the UE is a CSG member or not.

Non-Patent Document 1: 3GPP TS36.300Non-Patent Document 2: 3GPP TS36.331Non-Patent Document 3: 3GPP TS36.413

### SUMMARY OF THE INVENTION

### PROBLEMS TO BE SOLVED BY THE INVENTION

However, in the above-mentioned mobile communication system, in steps S2003A and 2003B, since the radio base station HeNB2 is not notified of the CSG-ID of the mobile station UE from the mobile switching center MME, it is not possible for the radio base station HeNB2 to determine whether the mobile station UE is a registered mobile station or an unregistered mobile station in the radio base station HeNB2, resulting in a problem that it is not possible to appropriately perform a resource assignment process when the radio base station HeNB2 operates in the "Hybrid".

Therefore, the present invention has been achieved in view of the above-described problems, and an object thereof is to provide a mobile communication method, a mobile station, and a radio base station, by which it is possible for a radio base station HeNB2 to appropriately perform a resource assignment process when a mobile station UE is handed over to a cell subordinate to the radio base station HeNB2 operating in "Hybrid".

### MEANS FOR SOLVING THE PROBLEM

The problem is solved by the subject-matter of independent claim 1. A first characteristic of an example is summarized as a mobile communication method comprising, a step A of determining whether a mobile station using a cell subordinate to a first radio base station as a serving cell is a registered mobile station in a second radio base station based on broadcast information transmitted by the second radio base station, a step B of transmitting, by the mobile station, a measurement report including predetermined information indicating the determination result to the first radio base station and a step C of transmitting, by the first radio base station, a handover request signal including the predetermined information to a mobile switching center when the predetermined information is included in the received measurement report.

A second characteristic of an example is summarized as a mobile station comprising, a determination unit configured to determine whether the mobile station is a registered mobile station in a second radio base station based on broadcast information transmitted by the second radio base station when the mobile station uses a cell subordinate to a first radio base station as a serving cell, and a measurement report transmission unit configured to transmit a measurement report including predetermined information indicating the determination result to the first radio base station.

A third characteristic of an example is summarized as a radio base station comprising, a reception unit configured to receive a measurement report from a mobile station, and a handover processing unit configured to transmit a handover request signal including predetermined information to a mobile switching center when the predetermined information is included in the received measurement report, the predetermined information indicating whether the mobile station is a registered mobile station in the radio base station.

### EFFECT OF THE INVENTION

As described above, according to the present invention, it is possible to provide a mobile communication method, a mobile station, and a radio base station, by which it is possible for a radio base station HeNB2 to appropriately perform a resource assignment process when a mobile station UE is operating in "Hybrid".

### BRIEF DESCRIPTION OF THE DRAWINGS

[Fig. 1] Fig. 1 is a diagram showing the entire configuration of a mobile communication system according to a first embodiment of the present invention.
[Fig. 2] Fig. 2 is a functional block diagram of a mobile station UE according to the first embodiment of the present invention.
[Fig. 3] Fig. 3 is a functional block diagram of a radio base station HeNB according to the first embodiment of the present invention.
[Fig. 4] Fig. 4 is a functional block diagram of a mobile switching center MME according to the first embodiment of the present invention.
[Fig. 5] Fig. 5 is a sequence diagram illustrating an operation of a mobile communication system according to the first embodiment of the present invention.
[Fig. 6] Fig. 6 is a sequence diagram illustrating an operation of a conventional mobile communication system.

### BEST MODES FOR CARRYING OUT THE INVENTION

### (Configuration of mobile communication system according to first embodiment of the present invention)

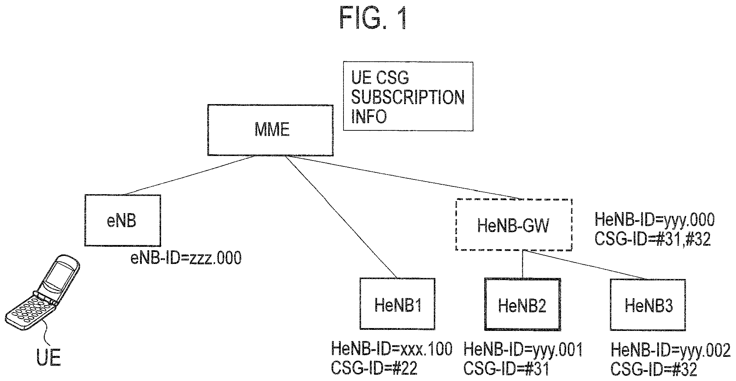

With reference to Fig. 1 to Fig. 4, the configuration of a mobile communication system according to a first embodiment of the present invention will be described.

The mobile communication system according to the present embodiment is an LTE mobile communication system, and includes a mobile switching center MME, a radio base station eNB and a radio base station HeNB1 connected to the mobile switching center MME, a gateway device HeNB-GW connected to the mobile switching center MME, and a radio base station HeNB2 and a radio base station HeNB3 connected to the gateway device HeNB-GW as illustrated in Fig. 1.

Here, identification information eNB-ID (E-CGI) of the radio base station eNB is "zzz.000", identification information HeNB-ID (E-CGI) of the gateway device HeNB-GW is "yyy.000", identification information HeNB-ID (E-CGI) of the radio base station HeNB1 is "xxx.100", identification information HeNB-ID (E-CGI) of the radio base station HeNB2 is "yyy.001", and identification information HeNB-ID (E-CGI) of the radio base station HeNB3 is "yyy.002".

Furthermore, CSG-ID of the radio base station HeNB1 is "#22", CSG-ID of the radio base station HeNB2 is "#31", and CSG-ID of the radio base station HeNB3 is "#32".

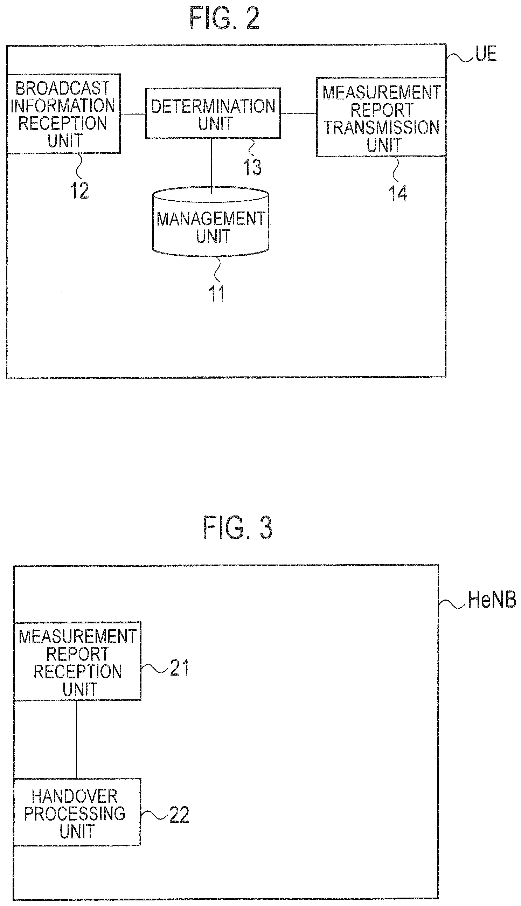

As illustrated in Fig. 2, a mobile station UE includes a management unit 11, a broadcast information reception unit 12, a determination unit 13, and a measurement report transmission unit 14.

The management unit 11 is configured to manage "Allowed CSG-ID List (that is, White List)". Specifically, the "Allowed CSG-ID List" includes one or a plurality of CSG-IDs for designating CSG to which the mobile station UE belongs.

The broadcast information reception unit 12 is configured to receive broadcast information in a serving cell and a neighboring cell.

For example, the broadcast information reception unit 12 is configured to acquire CSG-IDs or CSG indicators included in broadcast information transmitted by the radio base stations HeNB1 to HeNB3.

Here, the CSG-IDs included in the broadcast information are CSG-IDs of the radio base stations HeNB1 to HeNB3, and the CSG indicators included in the broadcast information indicate access modes of the radio base stations HeNB1 to HeNB3. In addition, as the access modes of the radio base stations HeNB1 to HeNB3, three types, that is, the above-mentioned "Open", "Closed", and "Hybrid" are used.

The determination unit 13 is configured to determine whether the mobile station UE is a registered mobile station in the radio base stations HeNB1 to HeNB3 based on the broadcast information transmitted by the radio base stations HeNB1 to HeNB3.

Specifically, the determination unit 13 may also be configured to perform the above-mentioned determination based on whether the CSG-IDs included in the broadcast information are stored in the "Allowed CSG-ID List" managed by the management unit 11.

The measurement report transmission unit 14 is configured to transmit a measurement report (Measurement Report) to the radio base station eNB that manages a serving cell of the mobile station UE, wherein the measurement report includes predetermined information (UE Preliminary Access Check Bit) indicating a determination result of the determination unit 13.

For example, when the determination unit 13 has determined that the mobile station UE is an unregistered mobile station in the radio base stations HeNB1 to HeNB3, the measurement report transmission unit 14 may also be configured to set "1" or "0" in the "UE Preliminary Access Check Bit" in the measurement report.

As illustrated in Fig. 3, each of the radio base stations HeNB1 to HeNB3 (hereinafter, representatively referred to as a radio base station HeNB) or the radio base station eNB includes a measurement report reception unit 21 and a handover processing unit 22.

The measurement report reception unit 21 of the radio base station eNB in Fig. 1 is configured to receive the measurement report received from the mobile station UE.

Specifically, the measurement report reception unit 21 of the radio base station eNB in Fig. 1 is configured to acquire the predetermined information (UE Preliminary Access Check Bit) included in the measurement report.

When the predetermined information (UE Preliminary Access Check Bit) is included in the measurement report received from the mobile station UE, the handover processing unit 22 of the radio base station eNB in Fig. 1 is configured to transmit a handover request signal (HO REQUIRED) including the predetermined information (UE Preliminary Access Check Bit) to the mobile switching center MME.

The handover processing unit 22 of the radio base station HeNB in Fig. 1 is configured to receive a handover request signal (HO REQUIRED) including predetermined information (UE Preliminary Access Check Bit) from the mobile switching center MME via the gateway device HeNB-GW according to the necessity.

Then, the handover processing unit 22 of the radio base station HeNB in Fig. 1 is configured to perform a resource assignment process with respect to the mobile station UE according to the predetermined information (UE Preliminary Access Check Bit) and the access mode in the radio base station HeNB.

For example, when the predetermined information (UE Preliminary Access Check Bit) indicates that the mobile station UE is an unregistered mobile station in the radio base stations HeNB2 and the access mode in the radio base station HeNB2 is the "Hybrid", the handover processing unit 22 of the radio base station HeNB in Fig. 1 may be configured to perform a resource assignment process for an unregistered mobile station with respect to the mobile station UE.

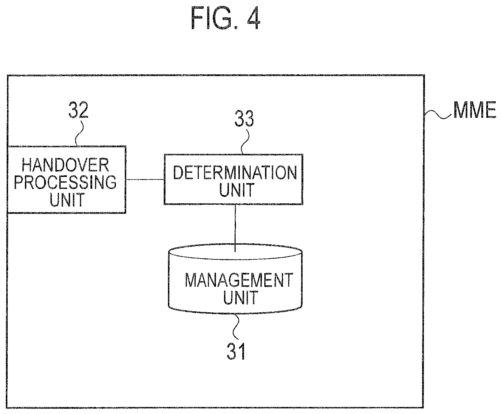

As illustrated in Fig. 4, the mobile switching center MME includes a management unit 31, a handover processing unit 32, and a determination unit 33.

The management unit 31 is configured to manage "UE CSG Subscription info" of each mobile station UE. Here, the "UE CSG Subscription info" includes "CSG-ID List" including CSG-IDs for identifying one or a plurality of CSGs to which each mobile station UE belongs.

The handover processing unit 32 is configured to receive the handover request signal (HO REQUIRED) from the radio base station eNB.

When predetermined information (UE Preliminary Access Check Bit) is included in the handover request signal (HO REQUIRED) received from the radio base station eNB, the handover processing unit 32 is configured to transmit a handover request signal (HO REQUEST) including the predetermined information (UE Preliminary Access Check Bit) to the radio base stations HeNB or the gateway device HeNB-GW.

Moreover, the handover processing unit 32 is configured to receive a handover request response signal (HO REQUEST ACK) including the CSG-ID of the radio base station HeNB from the radio base station HeNB or the gateway device HeNB-GW.

The determination unit 33 determines whether the mobile station UE is a registered mobile station or an unregistered mobile station in the radio base station HeNB2, based on the CSG-ID of the radio base station HeNB included in the handover request response signal (HO REQUEST ACK) received from the radio base station HeNB or the gateway device HeNB-GW, and the CSG-ID of the mobile station UE managed in the "CSG-ID List" in the "UE CSG Subscription info".

Furthermore, the determination unit 33 determines whether the determination result coincides with a determination result indicated by the predetermined information (UE Preliminary Access Check Bit).

When the determination unit 33 determines that the two determination results do not coincide with each other, the handover processing unit 32 transmits a handover failure signal (HO FAILURE) indicating the failure in the handover process to the radio base station eNB in Fig. 1, and transmits a signal (UE CONTEXT RELEASE COMMAND) for instructing the release of the resource assignment for the mobile station UE to the radio base station HeNB.

### (Operation of the mobile communication system according to the first embodiment of the present invention)

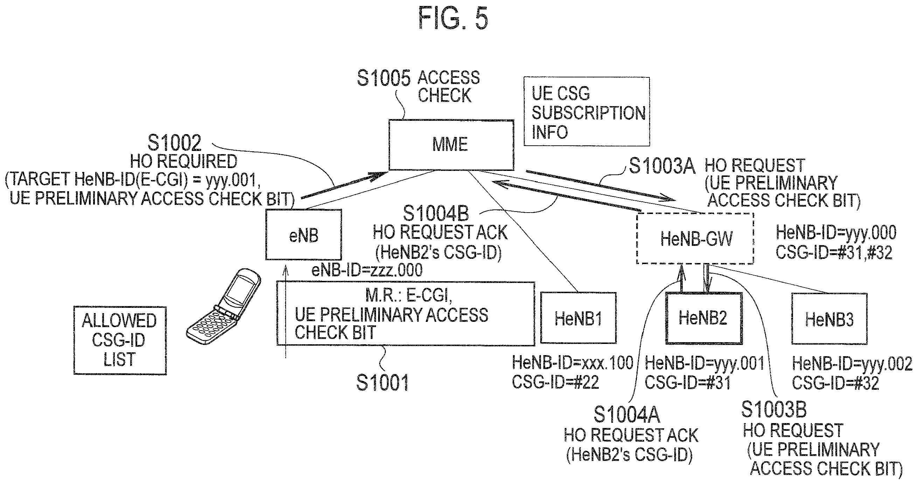

With reference to Fig. 5, the operation of the mobile communication system according to the first embodiment of the present invention will be described.

Specifically, with reference to Fig. 5, an operation in the mobile communication system when the mobile station UE is handed over to a cell subordinate to the radio base station HeNB2 from a cell subordinate to the radio base station eNB will be described.

As illustrated in Fig. 5, in step S1001, the mobile station UE determines whether the mobile station UE is a registered mobile station in the radio base station HeNB2 based on broadcast information transmitted by the radio base station HeNB2, and transmits a measurement report including the E-CGI of the radio base station HeNB2 or predetermined information (UE Preliminary Access Check Bit) indicating a determination result to the radio base station eNB.

In step S1002, the radio base station eNB transmits a handover request signal (HO REQUIRED) including identification information (HeNB-ID (E-CGI) = yyy.001) of the radio base station HeNB2 or the predetermined information (UE Preliminary Access Check Bit) to the mobile switching center MME.

In step S1003A, the mobile switching center MME transmits a handover request signal (HO REQUEST) including the predetermined information (UE Preliminary Access Check Bit) to the gateway device HeNB-GW, and in step S1003B, the gateway device HeNB-GW transmits the handover request signal (HO REQUEST) to the radio base station HeNB2.

Here, the radio base station HeNB2 performs a resource assignment process with respect to the mobile station UE according to the predetermined information (UE Preliminary Access Check Bit) included in the handover request signal (HO REQUEST) received from the mobile switching center MME, and the access mode in the radio base station HeNB2.

For example, when the predetermined information (UE Preliminary Access Check Bit) indicates that the mobile station UE is an unregistered mobile station in the radio base stations HeNB2 and the access mode in the radio base station HeNB2 is the "Hybrid", the radio base station HeNB2 may also perform a resource assignment process for an unregistered mobile station with respect to the mobile station UE.

Furthermore, when the predetermined information (UE Preliminary Access Check Bit) indicates that the mobile station UE is a registered mobile station in the radio base stations HeNB2 and the access mode in the radio base station HeNB2 is the "Hybrid", the radio base station HeNB2 may also perform a resource assignment process for a registered mobile station with respect to the mobile station UE.

In step S1004A, the radio base station HeNB2 transmits a handover request response signal (HO REQUEST ACK) including a result of the above-mentioned resource assignment and CSG-ID = #31 of the radio base station HeNB2 to the gateway device HeNB-GW, and in step S1004B, the gateway device HeNB-GW transmits the handover request response signal (HO REQUEST ACK) to the mobile switching center MME.

In step S1005, based on the CSG-ID = #31 of the radio base station HeNB2 included in the handover request response signal (HO REQUEST ACK) received from the gateway device HeNB-GW and the CSG-ID of the mobile station UE managed in the "CSG-ID List" in the "UE CSG Subscription info", the mobile switching center MME determines whether the mobile station UE is a registered mobile station or an unregistered mobile station in the radio base station HeNB2.

Then, the mobile switching center MME determines whether the determination result in step S1005 coincides with a determination result indicated by the predetermined information (UE Preliminary Access Check Bit).

When it is determined that the two determination results do not coincide with each other, the mobile switching center MME transmits a handover failure signal (HO FAILURE) indicating the failure in the handover process to the radio base station eNB, and transmits a signal (UE CONTEXT RELEASE COMMAND) for instructing the release of the resource assignment for the mobile station UE to the radio base station HeNB2.

### (Operation and Effect of the mobile communication system according to the first embodiment of the present invention)

According to the mobile communication system of the first embodiment of the present invention, when the mobile station UE is handed over to a cell subordinate to the radio base station HeNB2 operating in the "Hybrid", it is possible for the radio base station HeNB2 to differentiate a registered mobile station from an unregistered mobile station in the radio base station HeNB2 and appropriately perform a resource assignment process according to the predetermined information (UE Preliminary Access Check Bit) included in the handover request signal (HO REQUEST), and the access mode in the radio base station HeNB2.

The characteristics of the present embodiment as described above may be expressed as follows.

The first characteristic of the present embodiment is summarized in that a mobile communication method includes: a step A of determining whether a mobile station UE using a cell subordinate to a radio base station eNB (a first radio base station) as a serving cell is a registered mobile station in a radio base station HeNB2 (a second radio base station) based on broadcast information transmitted by the radio base station HeNB2; a step B of transmitting, by the mobile station UE, a measurement report (Measurement Report) including predetermined information (UE Preliminary Access Check Bit) indicating the determination result to the radio base station eNB; a step C of transmitting, by the radio base station eNB, a handover request signal (HO REQUIRED) including the predetermined information (UE Preliminary Access Check Bit) to a mobile switching center MME; a step D of transmitting, by the mobile switching center MME, a handover request signal (HO REQUEST) including the predetermined information (UE Preliminary Access Check Bit) to the radio base station HeNB2; and a step E of performing, by the radio base station HeNB2, a resource assignment process with respect to the mobile station UE according to the predetermined information (UE Preliminary Access Check Bit) included in the handover request signal (HO REQUEST) received from the mobile switching center MME, and the access mode in the radio base station HeNB2.

In the first characteristic of the present embodiment, in step A, the mobile station UE may also perform the above-mentioned determination based on whether CSG-ID included in the broadcast information is stored in "Allowed CSG-ID List" managed in the mobile station UE.

In the first characteristic of the present embodiment, in step E, when the predetermined information (UE Preliminary Access Check Bit) indicates that the mobile station UE is an unregistered mobile station in the radio base station HeNB2 and the access mode in the radio base station HeNB2 is "Hybrid", the radio base station HeNB2 may also perform a resource assignment process for an unregistered mobile station with respect to the mobile station UE.

In the first characteristic of the present embodiment, the mobile communication method may further include: a step of notifying, by the radio base station HeNB2, the mobile switching center MME of CSG-ID of the radio base station HeNB2; and a step of determining, by the mobile switching center MME, whether the CSG-ID of the radio base station HeNB2 notified by the radio base station HeNB2 coincides with CSG-ID of the mobile station UE managed in "CSG-ID List" in "UE CSG Subscription info".

The second characteristic of the present embodiment is summarized in that a mobile station UE includes: a determination unit 13 configured to determine whether the mobile station UE is a registered mobile station in a radio base station HeNB2 based on broadcast information transmitted by the radio base station HeNB2 when the mobile station UE uses a cell subordinate to a radio base station eNB as a serving cell; and a measurement report transmission unit 14 configured to transmit a measurement report including predetermined information (UE Preliminary Access Check Bit) indicating the determination result to the radio base station eNB.

In the second characteristic of the present embodiment, the determination unit 13 may be configured to perform the above-mentioned determination based on whether CSG-ID included in the broadcast information is stored in "Allowed CSG-ID List" managed by a management unit 11.

The third characteristic of the present embodiment is summarized in that a radio base station HeNB2 includes: a handover processing unit 22 configured to receive a handover request signal (HO REQUEST) from a mobile switching center MME, the handover request signal (HO REQUEST) including predetermined information (UE Preliminary Access Check Bit) indicating whether a mobile station UE is a registered mobile station in a radio base station HeNB2, and perform a resource assignment process with respect to the mobile station UE according to the predetermined information (UE Preliminary Access Check Bit) and an access mode in a radio base station HeNB.

In the third characteristic of the present embodiment, when the predetermined information (UE Preliminary Access Check Bit) indicates that the mobile station UE is an unregistered mobile station in the radio base station HeNB2 and the access mode in the radio base station HeNB2 is "Hybrid", the handover processing unit 22 may be configured to perform a resource assignment process for an unregistered mobile station with respect to the mobile station UE.

It is noted that the operation of the above-described the radio base station HeNB, the mobile switching center MME, the gateway device HeNB-GW or the mobile station UE may be implemented by a hardware, may also be implemented by a software module executed by a processor, and may further be implemented by the combination of the both.

The software module may be arranged in a storage medium of an arbitrary format such as RAM(Random Access Memory), a flash memory, ROM (Read Only Memory), EPROM (Erasable Programmable ROM), EEPROM (Electronically Erasable and Programmable ROM), a register, a hard disk, a removable disk, and CD-ROM.

The storage medium is connected to the processor so that the processor can write and read information into and from the storage medium. Such a storage medium may also be accumulated in the processor. The storage medium and processor may be arranged in ASIC. Such the ASIC may be arranged in the radio base station HeNB, the mobile switching center MME, the gateway device HeNB-GW or the mobile station UE. Further, such a storage medium or a processor may be arranged, as a discrete component, in the radio base station HeNB, the mobile switching center MME, the gateway device HeNB-GW or the mobile station UE.

Thus, the present invention has been explained in detail by using the above-described embodiments; however, it is obvious that for persons skilled in the art, the present invention is not limited to the embodiments explained herein. The present invention can be implemented as a corrected and modified mode without departing from the scope of the present invention defined by the claims. Therefore, the description of the specification is intended for explaining the example only and does not impose any limited meaning to the present invention.

## Claims

1. A mobile communication method when a mobile station (UE) performs handover from a cell subordinate to a first radio base station (eNB) to a cell subordinate to a second radio base station (HeNB2), in a mobile communication system provided with the first radio base station (eNB) and the second radio base station (HeNB2), the second radio base station (HeNB2) being capable of operating either in "Open", "Closed", or "Hybrid" and, being connected under a gateway device (HeNB-GW), the method comprising:
a step of determining (S1001), by the mobile station, whether the mobile station is a registered mobile station or an unregistered mobile station in the second radio base station (HeNB2), based on Closed Subscriber Identifier (CSG-ID) included in broadcast information transmitted by the second radio base station (HeNB2) and an allowed CSG-ID list managed by the mobile station (UE);
a step of transmitting, by the mobile station (UE), a measurement report including a determination result, to the first radio base station (eNB);
a step of transmitting (S1003A), by a mobile switching center (MME), a handover request signal including predetermined information indicating whether the mobile station (UE) is a registered mobile station or an unregistered mobile station in the second radio base station (HeNB2), to the gateway device (HeNB-GW);
a step of transmitting (S1003B), by the gateway device (HeNB-GW), the handover request signal including the predetermined information, to the second radio base station (HeNB2);
a step of performing, by the second radio base station (HeNB2), a resource assignment process for registered mobile station, on the mobile station (UE), when the predetermined information indicates that the mobile station (UE) is the registered mobile station in the second radio base station (HeNB2) and the second radio base station (HeNB2) operates in the "Hybrid"; and
a step of performing, by the second radio base station (HeNB2), a resource assignment process for unregistered mobile station, when the predetermined information indicates that the mobile station (UE) is the unregistered mobile station in the second radio base station (HeNB2) and the second radio base station (HeNB2) operates in the "Hybrid".

## Patentansprüche

1. Mobilkommunikationsverfahren, wenn eine Mobilstation (UE) eine Übergabe von einer Zelle, die einer ersten Funkbasisstation (eNB) untergeordnet ist, an eine Zelle, die einer zweiten Funkbasisstation (HeNB2) untergeordnet ist, durchführt, in einem Mobilkommunikationssystem, das mit der ersten Funkbasisstation (eNB) und der zweiten Funkbasisstation (HeNB2) versehen ist, wobei die zweite Funkbasisstation (HeNB2) dazu imstande ist, entweder in "Open", "Closed" oder "Hybrid" zu arbeiten, und , wenn unter einer Gateway-Vorrichtung (HeNB-GW) verbunden, das Verfahren umfasst:
- einen Schritt des Bestimmens (S1001), mittels der Mobilstation, ob die Mobilstation in der zweiten Funkbasisstation (HeNB2) eine registrierte Mobilstation oder eine nicht registrierte Mobilstation ist, auf Basis eines Closed-Subscriber-Identifier (CSG-ID), der in der von der zweiten Funkbasisstation (HeNB2) gesendeten Rundsendeinformation enthalten ist, und einer Erlaubte-CSG-ID-Liste, die von der Mobilstation (UE) verwaltet wird;
- einen Schritt des Sendens, mittels der Mobilstation (UE), eines Messberichts, der ein Bestimmungsergebnis enthält, an die erste Funkbasisstation (eNB);
- einen Schritt des Sendens (S1003A), mittels einer Mobilvermittlungsstelle (MME), eines Übergabe-Anforderungssignals, das eine vorbestimmte Information enthält, die angibt, ob die Mobilstation (UE) eine in der zweiten Funkbasisstation (HeNB2) registrierte Mobilstation oder nicht registrierte Mobilstation ist, an die Gateway-Vorrichtung (HeNB-GW);
- einen Schritt des Sendens (S1003B), mittels der Gateway-Vorrichtung (HeNB-GW), des Übergabe-Anforderungssignals, das die vorbestimmte Information enthält, an die zweite Funkbasisstation (HeNB2);
- einen Schritt des Durchführens, mittels der zweiten Funkbasisstation (HeNB2), eines Ressourcen-Zuweisungsprozesses für die registrierte Mobilstation auf der Mobilstation (UE), wenn die vorbestimmte Information angibt, dass die Mobilstation (UE) die registrierte Mobilstation in der zweiten Funkbasisstation (HeNB2) ist und die zweite Funkbasisstation (HeNB2) in "Hybrid" arbeitet; und
- einen Schritt des Durchführens, mittels der zweiten Funkbasisstation (HeNB2), eines Ressourcen-Zuweisungsprozesses für die nicht registrierte Mobilstation, wenn die vorbestimmte Information angibt, dass die Mobilstation (UE) in der zweiten Funkbasisstation (HeNB2) die nicht registrierte Mobilstation ist und die zweite Funkbasisstation (HeNB2) in "Hybrid" arbeitet.

## Revendications

1. Procédé de communication mobile lorsqu'une station mobile (UE) effectue un transfert à partir d'une cellule subordonnée à une première station de base radio (eNB) vers une cellule subordonnée à une seconde station de base radio (HeNB2), dans un système de communication mobile comprenant la première station de base radio (eNB) et la seconde station de base radio (HeNB2), la seconde station de base radio (HeNB2) étant capable de fonctionner soit en " Ouvert ", en " Fermé " ou en " Hybride ", et étant connectée sous un dispositif de passerelle (HeNB-GW), le procédé comprenant :
- une étape de détermination (S1001), par la station mobile, que la station mobile est une station mobile enregistrée ou une station mobile non-enregistrée dans la seconde station de base radio (HeNB2), sur la base de l'identificateur d'abonné fermé (CSG-ID) inclus dans des informations diffusées transmises par la seconde station de base radio (HeNB2) et une liste CSG-ID autorisée gérée par la station mobile (UE);
- une étape de transmission, par la station mobile (UE), d'un rapport de mesure incluant un résultat de détermination, à la première station de base radio (eNB) ;
- une étape de transmission (S1003A), par un centre de commutation mobile (MME), d'un signal de demande de transfert comprenant une information prédéterminée indiquant si la station mobile (UE) est une station mobile enregistrée ou une station mobile non-enregistrée dans la seconde station de base radio (HeNB2), au dispositif de passerelle (HeNB-GW) ;
- une étape de transmission (S1003B), par le dispositif de passerelle (HeNB-GW), du signal de demande de transfert incluant l'information prédéterminée, à la seconde station de base radio (HeNB2) ;
- une étape d'exécution, par la seconde station de base radio (HeNB2), d'un processus d'affectation de ressources pour une station mobile enregistrée, sur la station mobile (UE), lorsque l'information prédéterminée indique que la station mobile (UE) est la station mobile enregistrée dans la seconde station de base radio (HeNB2) et la seconde station de base radio (HeNB2) fonctionne en " Hybride "; et
- une étape d'exécution, par la seconde station de base radio (HeNB2), d'un processus d'affectation de ressources pour une station mobile non-enregistrée, lorsque l'information prédéterminée indique que la station mobile (UE) est la station mobile non-enregistrée dans la seconde station de base radio (HeNB2) et la seconde station de base radio (HeNB2) fonctionne en " Hybride ".
